# EUROPÄISCHE PATENTSCHRIFT

(11) **EP 0 496 975 B1**
(45) Veröffentlichungstag und Bekanntmachung des Hinweises auf die Patenterteilung: **27.07.1994**
(21) Anmeldenummer: 91120476.6
(22) Anmeldetag: 29.11.1991
(51) Int. Cl.: B64D 9/00, B64C 1/20

(54) **Anschlusselement**
Connecting element
Elément de raccordement

(30) Priorität: 26.01.1991 DE 4102273
(43) Veröffentlichungstag der Anmeldung: 05.08.1992
(73) Patentinhaber: Daimler-Benz Aerospace Airbus Gesellschaft mit beschränkter Haftung, 21129 Hamburg (DE)
(72) Erfinder: Vogg, Günter, W-2800 Bremen (DE); Wieck, Jürgen, W-2800 Bremen (DE)
(74) Vertreter: Hansmann, Dierk, Dipl.-Ing.

(56) Entgegenhaltungen:
- DE-A- 3 232 234
- US-A- 4 000 870

## Beschreibung

Die Erfindung betrifft ein Anschlußelement zur Fixierung und Halterung von Komponenten einer Sekundärstruktur, wie Traversen, Ausgleichsfußbodenplatten und dergleichen, an einem mit einer Lochteilung versehenen Schienenprofil, insbesondere an Sitzschienenprofilen in Verkehrsflugzeugen, mittels arretierbarer, mit den Sitzschienenprofilen zusammenwirkenden pilzförmigen Stollen.

In Zusammenhang mit den im Fußbodenbereich von Verkehrsflugzeugen angeordneten Schienenprofilen mit Lochteilung, die sowohl zur Halterung der Bestuhlung als auch von Komponenten eines Frachtladesystems dienen können, sind eine Reihe von Verriegelungs- und Anschlußelementen bekannt, die den verschiedensten Einsatzzwecken dienen. So ist beispielsweise aus der DE-OS 32 32 234, ein Schnellspannelement für Schienenprofile bekannt geworden, mit dessen Hilfe Frachtladeriegel an derartigen Sitzschienenprofilen befestigt werden können.

Aufgabe der Erfindung ist es, ein Element für diesen Einsatzbereich bereitzustellen, mit dem Komponenten einer Sekundärstruktur, wie Teile eines Ausgleichsfußbodensystems, Querstreben oder ähnliches, auf einfache Weise an den die primäre Struktur bildenden Schienenprofilen fixiert und gehalten werden können.

Die Erfindung löst diese Aufgabe durch ein Anschlußelement mit den kennzeichnenden Merkmalen des Patentanspruchs 1.

Vorteilhafte Weiterbildungen des erfindungsgemäßen Anschlußelements haben vor allem Vereinfachung seiner Herstellung sowie eine möglichst vielseitige Verwendbarkeit zum Ziel und sind in den weiteren Ansprüchen angegeben.

Im folgenden wird die Erfindung anhand eines in der Zeichnung dargestellten Ausführungsbeispiels näher erläutert. Es zeigen:
- Fig. 1: eine perspektivische, teilweise geschnittene Darstellung eines Anschlußelementes,
- Fig. 2: eine Sicht auf die Unterseite der in Fig. 1 dargestellten Anordnung,
- Fig. 3a bis 3c: eine perspektivische Darstellung eines Teils des Anschlußelementes sowie zwei Aufsichtdarstellungen dieser Anordnung in unterschiedlichen Positionen,
- Fig. 4: ein eingebautes Anschlußelement in Draufsicht **und**
- Fig. 5 und 6: ein eingebautes Anschlußelement in zwei um 90 Grad gedrehten Ansichten.

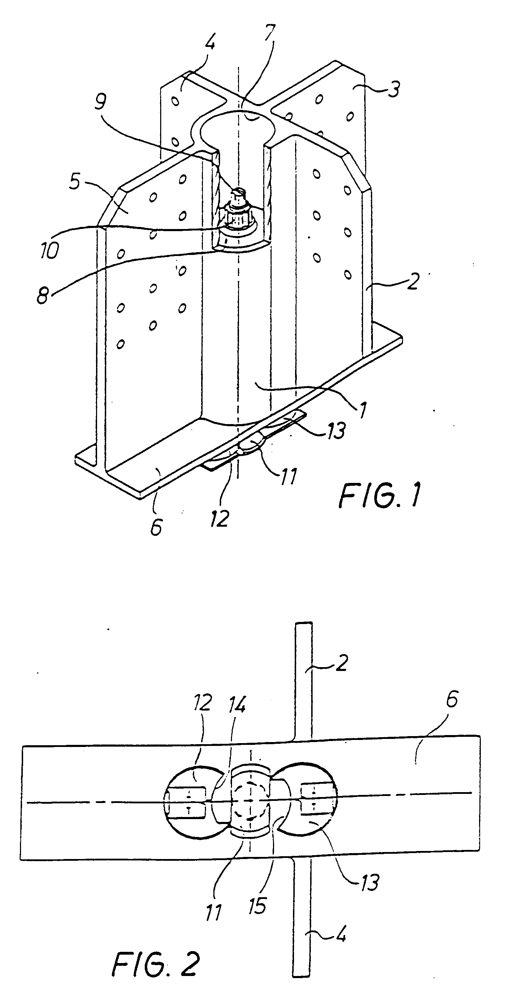

Das in Fig. 1 dargestellte Anschlußelement besteht im wesentlichen aus einem Trägerkörper 1, der eine annähernd zylindrische Form aufweist und an den jeweils um 90 Grad gegeneinander versetzt vier Anschlußflansche 2 bis 5 einstückig angeformt sind. Zusätzlich ist an diese, einen Knotenpunkt bildende Struktur eine Grundplatte 6 ebenfalls einstückig angeformt, wobei der Trägerkörper 1 sowie die Anschlußflansche 2 bis 5 in etwa senkrecht zur Grundplatte 6 angeordnet sind.

Trägerkörper 1, Anschlußflansche 2 bis 5 und Grundplatte 6 sind im Fall des hier beschriebenen Ausführungsbeispiels als gemeinsames Gußteil hergestellt; es ist aber im Rahmen der Erfindung selbstverständlich auch möglich, diese als Schmiede- oder Frästeil auszuführen.

Der Trägerkörper 1 weist eine in axialer Richtung verlaufende Bohrung 7 auf, die sich nach etwa einem Drittel der Längserstreckung des Trägerkörpers 1 mit einem Absatz 8 verjüngt und die sich auch durch die Grundplatte 6 erstreckt. In der Bohrung 7 ist ein Schraubenbolzen 9 angeordnet und durch eine Mutter 10, die auf dem Absatz 8 aufliegt, gehalten. der Schraubenbolzen 9 trägt an seinem unteren, der Grundplatte 6 zugewandten Ende einen fest mit diesem verbundenen pilzförmigen Aufsatz 11, der an zwei Seiten abgeflacht ist. Der Schraubenbolzen 9 und damit auch der Ansatz 11 sind über einen am oberen Ende des Schraubenbolzens 9 vorgesehenen Schlitz verdrehbar.

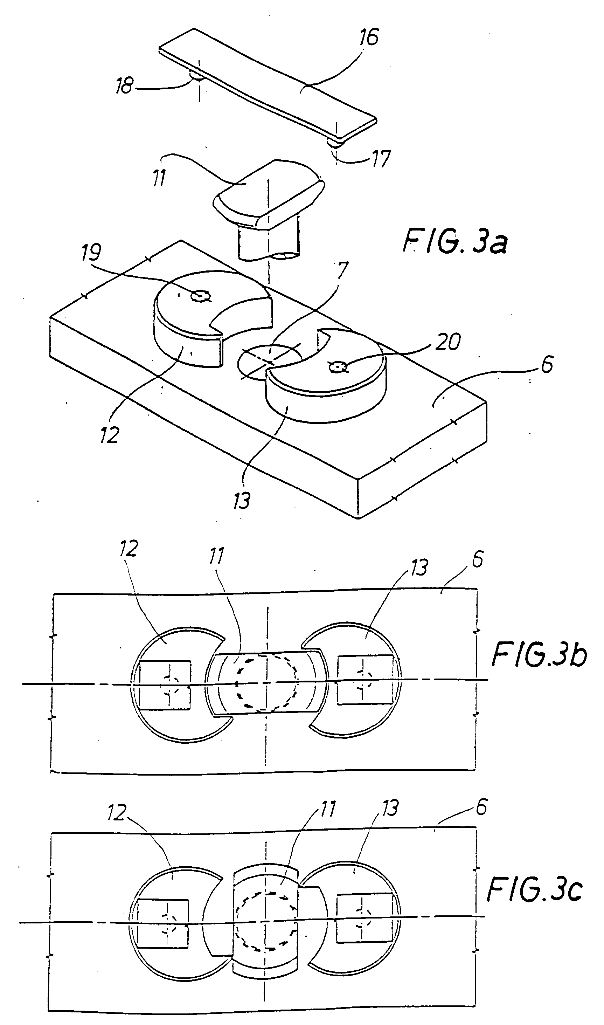

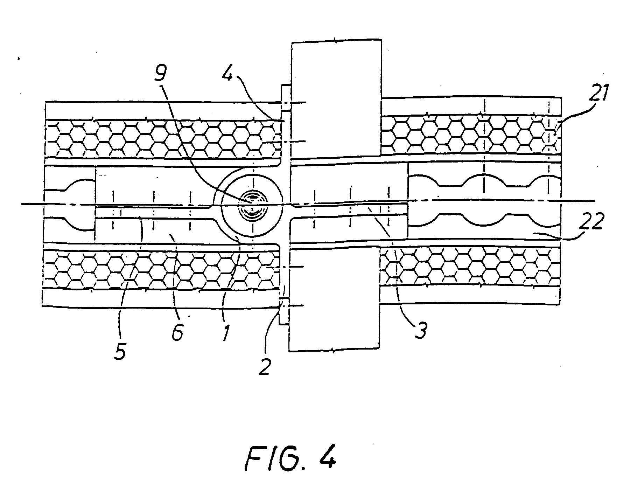

Auf der Unterseite der Grundplatte 6 sind zwei annähernd zylindrische Ansätze 12 und 13 befestigt, deren Durchmesser und Abstand voneinander mit der Lochteilung des in Fig. 4 erkennbaren Sitzschienenprofils korrespondieren. Die Ansätze 12 und 13 weisen Ausnehmungen 14 bzw. 15 auf, die dem Schwenkradius des pilzförmigen Aufsatzes 11 entsprechen und die zugleich, wie in den Figuren 3b und 3c erkennbar, als Anschläge dessen Drehbewegung begrenzen. Vervollständigt wird die Anordnung, wie in Fig. 3a erkennbar, durch eine Transportsicherung 16, die mit zwei Stiften 17 und 18 versehen ist, welche in entsprechende Bohrungen 19 und 20 der Ansätze 12 und 13 greifen.

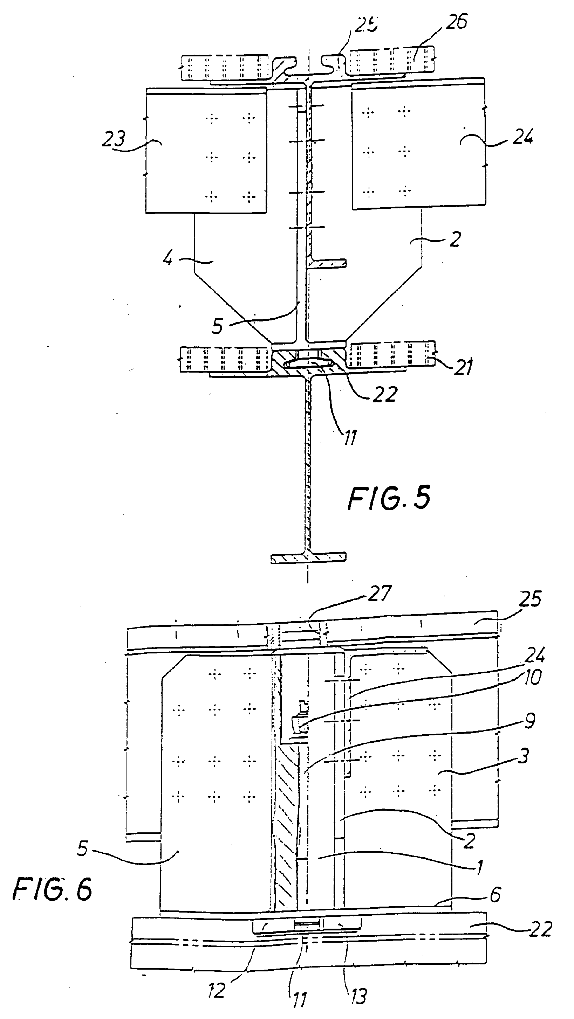

Die Einbauposition des vorstehend beschriebenen Anschlußelementes ist in den Figuren 4 bis 6 dargestellt. Für den Einbau wird zunächst der Schraubenbolzen 9 so gedreht, daß sich der pilzförmige Aufsatz 11 in seiner Entriegelungsposition befindet, in der die abgeflachten Seiten parallel zur Längsseite der Grundplatte 6 liegen und damit zugleich an den von den Ausnehmungen 14 und 15 der Ansätze 12 und 13 gebildeten Anschlägen anliegen, wie dies in Fig. 3b dargestellt ist.

In dieser Position läßt sich das Anschlußelement so in ein in einer Fußbodenplatte 21 eingebettetes Sitzschienenprofil 22 einstecken, daß die beiden Ansätze 12 und 13 jeweils in zwei benachbarte lochartige Erweiterungen des Sitzschienenprofils 22 greifen. Das Sitzschienenprofil 22 bildet dabei die Primärstruktur, an der mittels einer Anzahl gleichartiger Anschlußelemente eine Sekundärstruktur, die im Fall des hier gezeigten Ausführungsbeispiels aus Querstreben 23 und 24, zusätzlichen Sitzschienen 25 sowie einer zweiten Lage Fußbodenplatten 26 besteht, fixiert und gehalten werden soll.

Durch eine Drehung des Schraubenbolzens 9 um 90 Grad wird der pilzförmige Aufsatz 11 unter das Sitzschienenprofil 22 verschwenkt und durch Anziehen der Mutter 10 an diesem spielfrei zur Anlage gebracht. Der Weg des Aufsatzes 11 wird dabei wiederum durch die beiden Ansätze 12 und 13 begrenzt, wie dies aus Fig. 3c ersichtlich ist. Damit ist der von dem hier beschriebenen Anschlußelement gebildete Knotenpunkt verriegelt und es können die Komponenten 23 bis 26 der Sekundärstruktur an den Flanschen 2 bis 5 befestigt werden. Eine Bohrung 27 im Sitzschienenprofil 25 stellt sicher, daß der Schraubenbolzen 9 zugänglich bleibt, so daß es auch möglich ist, das Anschlußelement zusammen mit den bereits an diesem montierten Komponenten der Sekundärstruktur an der Primärstruktur zu befestigen.

Das Anschlußelement kann durch einfaches Kürzen auf unterschiedliche Einbauhöhen gebraucht werden, so daß es auch an Anschlußpunkten der Primärstruktur, die unterschiedliche Höhen aufweisen, angebracht werden kann bzw. auch bei geneigten Fußbodensystemen einsetzbar ist.

## Patentansprüche

1. Anschlußelement zur Fixierung und Halterung von Komponenten einer Sekundärstruktur, wie Traversen, Ausgleichsfußbodenplatten und dergleichen, an einem mit einer Lochteilung versehenen Schienenprofil, insbesondere an Sitzschienenprofilen in Verkehrsflugzeugen, mittels arretierbarer, mit den Sitzschienenprofilen zusammenwirkenden pilzförmigen Stollen, dadurch gekennzeichnet, daß an einem auf einer Grundplatte (6) angeordneten Trägerkörper (1), Anschlußflansche (2 bis 5) vorgesehen sind, daß in einer sich durch den Trägerkörper (1) sowie die Grundplatte (6) in Richtung auf das Sitzschienenprofil (22) erstreckenden Bohrung (7) ein Verriegelungselement (9, 11) dreh- und höhenverstellbar gehalten ist, das einen in das Sitzschienenprofil (22) ragenden pilzförmigen Aufsatz (11) trägt, und daß die Grundplatte (6) mit zylindrischen Ansätzen (12, 13) versehen ist, deren Größe und gegenseitiger Abstand mit der Lochteilung des Sitzschienenprofils (22) übereinstimmt.

2. Anschlußelement nach Anspruch 1, dadurch gekennzeichnet, daß der Trägerkörper (1) rohrförmig ausgebildet ist und vier jeweils um 90 Grad versetzt angeordnete Anschlußflansche (2 bis 5) trägt.

3. Anschlußelement nach Anspruch 1 oder 2, dadurch gekennzeichnet, daß die Grundplatte (6) sowie die Anschlußflansche (2 bis 5) einstückig an den Trägerkörper (1) angeformt sind.

## Claims

1. Connecting element for fixing and holding components of a secondary structure, such as cross-bars, levelling floor panels and the like, on a rail section provided with spaced holes, in particular on seating rail sections in commercial aircraft, by means of mushroom-shaped caps which can be secured in position and co-operate with the seating rail sections, characterised in that connecting flanges (2 to 5) are provided on a bearing member (1) arranged on a base plate (6), that a locking element (9, 11) is held in a rotatable and vertically adjustable manner in a bore (7) extending through the bearing member (1) and the base plate (6) in the direction of the seating rail section (22), which element bears a mushroom-shaped cap (11) which projects into the seating rail section (22), and that the base plate (6) is provided with cylindrical projections (12, 13), the size and spacing of which correspond to those of the spaced holes in the seating rail section (22).

2. Connecting element according to claim 1, characterised in that the bearing member (1) is tubular and bears four connecting flanges (2 to 5), each of which is staggered by 90 degrees.

3. Connecting element according to claim 1 or 2, characterised in that the base plate (6) and the connecting flanges (2 to 5) are moulded onto the bearing member (1) in one piece.

## Revendications

1. Elément de raccordement pour la fixation et le maintien de composants d'une structure secondaire, telle que des traverses, des plaques d'égalisation de planchers et des composants analogues, sur un rail profilé pourvu d'une série de trous, en particulier sur des rails profilés pour sièges dans les avions de transport, au moyen de crampons pouvant être bloqués, en forme de champignons coopérant avec les rails profilés de sièges, élément caractérisé en ce que l'on prévoit sur un corps de support (1) disposé sur une plaque de base (6) des brides de raccordement (2 à 5), en ce que l'on maintient dans un perçage (7) s'étendant à travers le corps de support (1) ainsi que la plaque de base (6) en direction du rail profilé de siège (22) un élément de verrouillage (9, 11) que l'on peut régler en rotation et en hauteur, qui porte un chapeau (11) en forme de champignon pénétrant dans le rail profilé de siège (22) et en ce que la plaque de base (6) est pourvue d'appendices cylindriques (12, 13) dont la grandeur et la distance mutuelle coïncide avec la série de trous du rail profilé de sièges (22).

2. Elément de raccordement selon la revendication 1, caractérisé en ce que le corps de support (1) est constitué en forme de tube et porte quatre brides de raccordement (2 à 5) disposées de façon décalée respectivement de 90°.

3. Elément de raccordement selon la revendication 1 ou 2, caractérisé en ce que la plaque de base (6) ainsi que les brides de raccordement (2 à 5) sont formées d'une seule pièce sur le corps de support (1).
